# EUROPEAN PATENT SPECIFICATION

(11) **EP 4 403 318 B1**
(45) Date of publication and mention of the grant of the patent: **18.11.2026**
(21) Application number: 23188286.1
(22) Date of filing: 28.07.2023
(51) Int. Cl.: B25J 9/16

(54) **ROBOT SYSTEM AND METHOD FOR LEARNING ONE OR MORE NEW SEMANTIC RELATIONS IN A KNOWLEDGE BASE OF PHYSICAL SKILLS**
ROBOTERSYSTEM UND VERFAHREN ZUM LERNEN EINER ODER MEHRERER NEUER SEMANTISCHER BEZIEHUNGEN IN EINER WISSENSBASIS PHYSISCHER FÄHIGKEITEN
SYSTÈME DE ROBOT ET PROCÉDÉ D'APPRENTISSAGE D'UNE OU DE PLUSIEURS NOUVELLES RELATIONS SÉMANTIQUES DANS UNE BASE DE CONNAISSANCES DE COMPÉTENCES PHYSIQUES

(30) Priority: 19.01.2023 EP 23152462
(43) Date of publication of application: 24.07.2024
(73) Proprietor: HONDA MOTOR CO., LTD., Tokyo 105-8404 (JP)
(72) Inventor: Wang, Chao, 63073 Offenbach am Main (DE); Belardinelli, Anna, 63073 Offenbach am Main (DE); Stouraitis, Theodoros, 63073 Offenbach am Main (DE); Tanneberg, Daniel, 63073 Offenbach am Main (DE); Gienger, Michael, 63073 Offenbach am Main (DE); Hasler, Stephan, 63073 Offenbach am Main (DE)
(74) Representative: Beder, Jens

(56) References cited:
- US-A1- 2013 343 640
- US-A1- 2021 086 370
- US-B1- 10 569 420
- ABDO NICHOLA ET AL: "Learning manipulation actions from a few demonstrations", 2013 IEEE INTERNATIONAL CONFERENCE ON ROBOTICS AND AUTOMATION (ICRA); 6-10 MAY 2013; KARLSRUHE, GERMANY, IEEE, US, 6 May 2013 (2013-05-06), pages 1268 - 1275, XP032506366, ISSN: 1050-4729, ISBN: 978-1-4673-5641-1, [retrieved on 20131013], DOI: 10.1109/ICRA.2013.6630734
- LUEBBERS MATTHEW B ET AL: "ARC-LfD: Using Augmented Reality for Interactive Long-Term Robot Skill Maintenance via Constrained Learning from Demonstration", 2021 IEEE INTERNATIONAL CONFERENCE ON ROBOTICS AND AUTOMATION (ICRA), IEEE, 30 May 2021 (2021-05-30), pages 3794 - 3800, XP033989776, DOI: 10.1109/ICRA48506.2021.9561844
- MULLEN JAMES ET AL: "Communicating Inferred Goals With Passive Augmented Reality and Active Haptic Feedback", IEEE ROBOTICS AND AUTOMATION LETTERS, IEEE, vol. 6, no. 4, 13 September 2021 (2021-09-13), pages 8522 - 8529, XP011878965, DOI: 10.1109/LRA.2021.3111055

## Description

The invention relates to a robot system and a method for learning one or more new semantic relations in a knowledge base of physical skills.

In general, in whichever situation where a robot cannot be fully preprogrammed, the learning of new skills is required. Robot learning indeed aims at extending the robot's knowledge and action capabilities of intelligent physical systems by providing examples of new skills and related objects. In particular, imitation learning/learning from demonstration (LfD) exploits physical demonstrations of tasks performed by a human teacher to learn relevant relationships between objects, actions, and effects. For generalization, this usually requires numerous demonstrations with different movement trajectories or a plurality of different appropriate objects, often performed by multiple teachers. In this sense, the scalability of the approach is often limited to the observed demonstrations, which are not followed by an active learning phase. The present invention is related to robot learning from demonstration scenarios. In LfD scenarios with robots, a human teacher demonstrates a physical skill to a robot system. This can for instance be the task of pouring a beverage into a glass, or to insert a light bulb into a socket. The human demonstrates the task several times and the robot observes the demonstration. Thus, the system acquires the data from the human teacher using its sensory modalities, like for example a camera and microphone or acceleration or force sensors.

Common LfD approaches utilize:
- kinematic observations: For instance, observing the teacher's and object's motions using camera-based tracking.
- force information: For instance, using kinesthetic teaching: The human teacher physically guides the robot through the task by moving the end-effector. The system records both kinematic as well as force data.
- others: for instance, language etc.

The representations that are learnt into a model of the skill via LID can be continuous or discrete. Symbolic or semantic learning is commonly understood as a kind of discrete representation learning. While continuous representations learn for instance models of trajectories, semantic learning is abstracting these, and learns for instance a model of preconditions, actions, and effects. For instance, the action of pouring the contents of a bottle into a glass requires the precondition that the bottle is open and has the effect that the glass is full. The precondition relates to the initial state while the effect relates to the achieved final state. Semantic learning is therefore very powerful when it comes to generalizing a skill to novel situations, since a transfer of action - effect to a different problem (starting from a different initial state or targeted at a different final state) is easy to model. For instance, the action "pour" can be applied to pouring the contents of a bottle into any other container than a glass (e.g., into a flowerpot). The transfer of actions to different problem settings is typically referred to as "generalization capability". The information how to generalize is often represented in a knowledge representation framework. Prominent examples are knowledge graphs.

N. Abdo, H. Kretzschmar, L. Spinello and C. Stachniss, "Learning manipulation actions from a few demonstrations," 2013 IEEE International Conference on Robotics and Automation, Karlsruhe, Germany, 2013, pp. 1268-1275, doi: 10.1109/ICRA.2013.6630734 discloses a robot system that learns manipulation actions from a small number of human demonstrations by deriving symbolic preconditions and effects from the observed initial and final states, and then uses the learned action descriptions for symbolic planning. It further allows teacher feedback to remove false-positive preconditions or effects when the learned action model is contradicted or cannot be executed.

The present invention aims to accelerate the learning progress in semantic LfD scenarios with a novel interactive learning paradigm that reverts the information flow so that a novice user or lay can efficiently teach skills to an assistive robot system. For example, the present invention aims at providing an interactive interaction and/or visualization scheme that allows novice and unskilled users to teach new actions and/or capabilities to robot systems.

In the light of the above, it is an object of the present invention to provide a robot system and method for learning one or more new semantic relations in a knowledge base of physical skills. It is in particular an object of the present invention to provide such a robot system and method that allows a novice user or lay efficiently teaching skills to the robot system.

These and other objects, which become apparent upon reading the following description, are solved by the subject matter of the independent claims. The dependent claims refer to preferred embodiments of the invention.

According to a first aspect of the invention, a robot system for learning one or more new semantic relations in a knowledge base of physical skills is provided. Herein, the term "robot system" is abbreviated by the term "system". The system is configured to obtain knowledge on a physical skill by observing a demonstration, by a human user, of the physical skill. That is, a human user may demonstrate a physical skill and the system is configured to obtain knowledge on the physical skill by observing the demonstration of the physical skill performed by the human user. The system is configured to update the knowledge base with the obtained knowledge. In other words, the system is configured to update the knowledge base according to the obtained knowledge. The system is configured to generate a hypothesis of using the physical skill in a different context compared to a context of the demonstration by performing similarity considerations on the knowledge base using the obtained knowledge. The system is configured to present the hypothesis to the human user. The system is configured to receive a confirmation or a refusal from the human user with regard to the presentation of the hypothesis to the human user. The system is configured to update the knowledge base according to the hypothesis in case of receiving the confirmation or discard the hypothesis in case of receiving the refusal. The system is further configured to query, from the human user, a reason for the confirmation or refusal in response to receiving the confirmation or refusal, respectively, to receive the reason from the human user, and to update the knowledge base according to the received reason.

In other words, the first aspect proposes a robot system that may obtain knowledge on a physical skill (known physical skill or new physical skill) from a demonstration by a human user of the physical skill in a certain context and use the obtained knowledge on the physical skill for generating a new use case of the physical skill, i.e. proposing a usage of the physical skill in a different context. The term "situation" may be used as a synonym for the term "context". For verifying, whether the generated use case is correct, i.e. using the physical skill in the different context is feasible or correct, the robot system may present the generated use case in the form of a hypothesis to the human user. This allows the user to verify whether the generated use case of the physical skill presented by the user is feasible or correct. In case the feedback by the user on the generated new use case of the physical skill is positive, the knowledge base may be updated according to the new use case of the physical skill. That is, the new use case of the physical skill and, thus, the hypothesis may become knowledge of the knowledge base.

Obtaining knowledge on a physical skill may comprise obtaining knowledge on how to actually perform the physical skill and/or obtaining knowledge on the characteristics of the physical skill to understand the physical skill, e.g. understand how the physical skill is performed and/or an effect of the physical skill on different objects. In other words, obtaining knowledge on a physical skill may comprise learning to perform the physical skill and/or learning a semantic representation, i.e. meaning or understanding, of the physical skill. A semantic representation of a physical skill may comprise information on the meaning of the physical skill, e.g. what is happening when the physical skill is performed, for understanding the physical skill. A semantic representation of a physical skill may comprise information one or more constraints and/or requirements for performing the physical skill. For example, in case the physical skill is pouring out a cup, the semantic representation of the physical skill may comprise information on a grasping affordance of the cup, a trajectory that may be moved along for grasping the cup of tea, one or more pouring locations at which the cup of tea may be poured out etc.

The presentation of the hypothesis and reception of a confirmation or rejection allows teaching additional knowledge to the system in an interactive and, in comparison to full skill demonstrations, faster way. Moreover, the system allows a novice and unskilled user to teach a new physical skill, e.g., new action(s) and/or capabilities, to the system, because the user merely confirms or refuses a hypothesis generated by the robot system. The system allows a user to teach a semantic representation of a known and/or observable physical skill to the system. That is, the system allows a user to teach the system a meaning or an understanding of a physical skill. This allows the system to use the understanding of the physical skill for planning and/or explanations. The user does not need to know the knowledge base of the robot system, i.e., a current state of the capabilities and/or knowledge of the robot system. Moreover, the system allows the user to teach knowledge on physical skills with regard to different contexts and, thus, multiple tasks by demonstrating the physical skill in one context of the different contexts to the robot system (i.e. performing a task of the multiple tasks). The user does not need to demonstrate the physical skill with regard to each of the different contexts.

For example, the physical skill that the human user wants the robot system to learn is to pour a liquid from one container to another container. There may be multiple tasks associated with this physical skill that the human user wants the robot system to learn. The aforementioned multiple tasks may comprise, for example, pouring wine from a wine bottle into a wine glass, pouring water from a water bottle into a water glass, pouring tea from a tea kettle into a tea cup, pouring coffee from a coffee pot into a coffee cup etc. In other words, the user may want the robot system to learn pouring a liquid from one container in another container in different contexts. These different contexts may, for example, comprise a wine bottle containing wine and a wine glass to be filled with wine (e.g. an empty or non-full wine glass); a water bottle containing water and a water glass to be filled with water (e.g. an empty or non-full water glass); a tea kettle containing tea and a tea cup to be filled with tea (e.g. an empty or non-full tea cup); a coffee kettle containing coffee and a coffee cup to be filled with coffee (e.g. an empty or non-full coffee cup); etc.

Thus, for the user to teach to the robot system the physical skill of pouring a liquid in different contexts it is sufficient that the user demonstrates the physical skill of pouring a liquid in one of the contexts, e.g., by demonstrating pouring wine from a wine bottle into a wine glass. The robot system may use its knowledge base to generate a hypothesis of using the physical skill of pouring a liquid in different contexts compared to the context of the demonstration. For example, assuming that the robot system knows as objects a water bottle, a water glass, a tea kettle, a tea cup, a coffee pot and a coffee cup as well as the respective one or more physical features, and/or one or more attributes and/or one or more effects of the aforementioned objects, the robot system may generate a hypothesis using the physical skill of pouring a liquid in the contexts of a water bottle and a water glass; a tea kettle and a tea cup, and a coffee pot and a coffee cup.

For this, the robot system may perform similarity considerations on the knowledge base using the obtained knowledge of the demonstrated skill of e.g. pouring wine from a wine bottle into a wine glass. For example, the robot system may know from the knowledge base that a wine bottle, a water bottle, a tea kettle and a coffee pot are similar to each other in that they are each an object allowing a respective liquid to be stored. Moreover, the robot system may know from the knowledge base that a wine glass, a water glass, tea cup and a coffee cup are similar to each other in that they are each an object allowing a liquid to be poured in it in order to be drunk by a human. Moreover, the robot system may know from the knowledge base that a wine bottle and a wine glass are related to drinking wine, a water bottle and a water glass are related to drinking water, a tea kettle and tea cup are related to drinking tea, and a coffee pot and a coffee cup are related to drinking coffee. Thus, by performing similarity considerations on the knowledge base using the obtained knowledge of the demonstrated physical skill of pouring wine from a wine bottle into a wine glass the robot system may generate the following hypotheses: Water may be poured from a water bottle into a water glass, tea may be poured from a tea kettle into a tea cup, and coffee may be poured from a coffee pot into a coffee cup. The robot system may present these hypotheses to the human user. The human user will confirm each of these hypotheses, because they are correct. Thus, the robot system may receive a confirmation for each of these hypotheses and may update the knowledge base according to each of these hypotheses. As exemplarily described above, the robot system may learn different physical skills, such as pouring wine from a wine bottle into a wine glass, pouring water from a water bottle into a water glass, pouring tea from a tea kettle into a tea cup, and pouring coffee from a coffee pot into a coffee cup, by observing a demonstration of one of the different physical skills, e.g. pouring wine from a wine bottle into a wine glass. Thus, a human user merely demonstrates one physical skill in order for the robot system to learn different physical skills. Using a demonstrated physical skill in a new context compared to the context in which the demonstrated physical skill is demonstrated may be referred to as generalized physical skill.

A physical skill may comprise an action performed to one or more objects optionally using one or more objects. For example, a physical skill may be grasping one or more objects; sorting one or more objects; cutting one or more objects, such as one or more fruits, using an object, such as a knife; pouring a beverage into a glass; inserting a light bulb into a socket etc. The human user may demonstrate the physical skill one or more times. The physical skill may be any physical skill that may be performed by the robot system with regard to the characteristics of the robot system, such as joint limits of the robot system, speed limits of the robot system, energy consumption limits of the robot system, etc.

Learning one or more new semantic relations in the knowledge base of physical skills may be referred to as semantic learning. Semantic learning may be abstracting physical skills and learning a model of preconditions, actions and effects with regard to the physical skills.

The robot system may comprise one or more sensory modalities (i.e. one or more sensors) for observing the demonstration. The one or more sensory modalities may for example comprise at least one of the following: a camera, microphone, acceleration sensor(s), force sensor(s) etc.

The robot system may be or may comprise a robot, such as a humanoid robot. The robot system may be an assistive robot system. For example, the robot system may be or may comprise an assistive robot. An assistive robot (system) may be understood as a robot (system) that is configured to assist a human user in its daily routine and/or job. The robot system may comprise parts that resemble a part of a human body, such as an arm. That is, the robot system may comprise or may be a robot arm.

The robot system may be configured to access the knowledge base. The knowledge base may be a part of the robot system, e.g. stored in a storage of the robot system. In addition, or alternatively, the knowledge base may be stored in one or more external storages that are accessible by the robot system. The knowledge base may be a semantic network. For example, the knowledge base may be implemented (e.g. functionally) in the form of a knowledge representation, such as a knowledge graph. The knowledge base may be implemented (e.g. functionally) in the form of a semantic graph. A semantic relation may be an association that exists between two or more pieces of knowledge of the knowledge base.

For example, in case the knowledge base comprises knowledge on a wine bottle, water bottle, tea kettle, and coffee kettle then a semantic relation between all of the aforementioned objects may be that storage of a drinkable liquid is associated with each of them. That is, the robot system knows due to the aforementioned semantic relation that the aforementioned four liquid containers are similar to each other in that each of them is suited for storing liquid. A semantic relation between the tea kettle and the coffee kettle may be that storage of a hot liquid (e.g. boiling liquid) is associated with each of these two objects. That is, the robot system knows due to the aforementioned semantic relation that the tea kettle and the coffee pot are similar to each other in that each of them is suited for storing a hot (e.g. boiling) liquid. A semantic relation may associate to one or more objects that are known by the knowledge base at least one of one or more attributes, one or more actions, one or more effects, one or more physical skills of which the objects are subject to and one or more physical skills that use the objects.

For example, a knowledge base may comprise as objects a knife, an apple, and a coconut. The knowledge base may comprise as a semantic relation that the apple and the coconut are a fruit. That is, the aforementioned semantic relation may associate to the apple and the coconut the attribute of being a fruit. Alternatively, the aforementioned semantic relation may associate to the apple and the coconut a hierarchy of being a fruit.

With the above-described example of a knowledge base, a human user may demonstrate as a physical skill to the robot system cutting an apple with a knife. The robot system may obtain knowledge of this physical skill, i.e. on cutting the apple with the knife, by observing the human user cutting the apple with the knife. The robot system may update the knowledge base with the obtained knowledge. That is, the robot system may add a semantic relation to the knowledge base that associates to the apple the physical skill of cutting with a knife, wherein the apple is subject to the physical skill, i.e. the apple is cut by the knife. The robot system may add a semantic relation to the knowledge base that associates to the knife the physical skill of cutting an apple, wherein the knife is used (as a tool) for cutting the apple. The robot system may generate a hypothesis of using the physical skill of cutting with the knife in a different context compared to the context of the demonstration by performing similarity considerations on the knowledge base using the obtained knowledge on the demonstrated physical skill of cutting an apple with the knife. For example, the robot system may generate a hypothesis that a coconut instead of the apple may be cut with the knife. That is, the robot system may generate the hypothesis of using the physical skill of cutting with a knife in a different context compared to the context of the demonstration. The different context is different in that the object to be cut with the knife is a coconut compared to an apple that was cut with the knife during the demonstration. The robot system may come to this hypothesis, because the apple and the coconut are similar to each other in that they are both a fruit. The robot system may present to the human user the hypothesis of cutting a coconut with the knife. The human user knows that a knife for cutting an apple is not suited for cutting a coconut because the coconut is harder than the apple. Therefore, the human user will refuse the presented hypothesis. That is, the robot system may receive a refusal from the human user with regard to the presentation of the hypothesis and, thus, discards the hypothesis.

Similarity may be derived from a comparison of attributes stored in the knowledge base.

Assuming a peach is an object known by the knowledge base and the knowledge base comprise as a semantic relation that the peach is a fruit, in the aforementioned example the robot system may generate a hypothesis that a peach instead of the apple may be cut with the knife. That is, the robot system may generate the hypothesis of using the physical skill of cutting with a knife in a different context compared to the context of the demonstration. The different context is different in that the object to be cut with the knife is a peach compared to an apple that was cut with the knife during the demonstration. The robot system may present to the human user the hypothesis of cutting a peach with the knife. The human user knows that a knife for cutting an apple is suited for cutting a peach because the peach is as soft or softer than the apple. Therefore, the human user will confirm the presented hypothesis. That is, the robot system may receive a confirmation from the human user with regard to the presentation of the hypothesis and, thus, update the knowledge base according to the hypothesis. That is, the robot system may add a semantic relation to the knowledge base that associates to the peach the physical skill of cutting with a knife, wherein the peach is subject to the physical skill (i.e. the physical skill is applied to the peach).

Optionally, the robot system may be configured to discard the hypothesis and store that the hypothesis has been refused, in case of receiving the refusal.

Thus, in the light of the above, the first aspect may propose a robot system, such as an assistive robot system, for learning one or more new semantic relations of physical skills, the system being configured to interact with a human user, wherein the system observes a demonstration of a physical skill, generates a hypothesis based on similarity considerations derived from system knowledge, present the hypothesis, receive conformation or refusal, and update the system's knowledge base accordingly.

The obtained knowledge on the physical skill may comprise knowledge on a precondition associated with the physical skill, knowledge on an action associated with the physical skill, and knowledge on an effect that results from the precondition and the action.

For example, assuming that the physical skill is cutting an apple with a knife, a precondition of the physical skill may be an apple being an object to be cut, a knife being an object (e.g. tool) for performing the cutting, an attribute of the apple may be uncut. An action associated with the physical skill may be the action of cutting. An effect that results from the precondition and the action may be that the apple is cut in two or more pieces.

Generating a hypothesis of using the physical skill in a different context compared to a context of the demonstration may mean generalizing the physical skill to a new context (i.e. new situation). Since a transfer of action - effect to a different problem (e.g. starting from a different initial state or targeting at a different final state) may be easy to model, generalizing a skill to novel situation may be easily achieved. The information or knowledge to generalize may be stored in the knowledge base. It may be represented (e.g. functionally represented) in a knowledge representation, such as a knowledge graph.

The knowledge on the precondition associated with the physical skill may comprise knowledge on an initial state of one or more objects involved in the demonstration of the physical skill and one or more attributes of the one or more objects before the demonstration. The initial state may be understood as a state present before the demonstration is performed and, thus, present directly at the beginning of the demonstration.

The knowledge on the action associated with the physical skill may comprise knowledge on an action performed during the demonstration with regard to one or more objects involved in the demonstration of the physical skill.

The knowledge on the effect may comprise knowledge on a final state of one or more objects involved in the demonstration of the physical skill and one or more attributes of the one or more objects after the demonstration. The final state may be understood as a state present after the demonstration is performed and, thus, present directly at the end of the demonstration.

For example, assuming that the physical skill is pouring the content of a bottle into a glass, this physical skill requires the precondition that the bottle is open and comprises content, and has the effect that the glass is full. The precondition relates to the initial state while the effect relates to the final state.

The knowledge on the precondition associated with the physical skill of pouring the content of a bottle into a glass may comprise knowing that the bottle and the glass are used for the physical skill as an initial state of the objects involved in the physical skill. An initial state of an attribute of the bottle may be that the bottle is filled with a content. An initial state of an attribute of the glass may be that the glass is able to be filled with the content. The knowledge on the action associated with the physical skill of pouring the content of a bottle into a glass may be knowing that during the physical skill the content of the bottle is poured (e.g. by picking up and moving the bottle towards the glass such that the content of the bottle is poured into the glass). The knowledge on the effect may comprise knowing that the bottle and the glass have been used for the physical skill as a final state of the objects involved in the physical skill. A final state of an attribute of the bottle may be that the bottle has lost some or all of its content and a final state of an attribute of the glass may be that the glass is filled with the content of the bottle.

The system may be configured to obtain the knowledge on the action associated with the physical skill from the human user. For example, the system may record using one or more microphones a voice of the human user telling the action associated with the physical skill.

Optionally, using the physical skill in the different context compared to the context of the demonstration comprises using the physical skill with regard to one or more new objects that are similar to one or more objects involved in the demonstration of the physical skill, and that are known by the knowledge base.

In other words, the system may be configured to generate a hypothesis of using the physical skill with regard to one or more new objects that are similar to one or more objects involved in the demonstration of the physical skill, and that are known by the knowledge base by performing similarity considerations on the knowledge base using the obtained knowledge.

Optionally, the one or more objects involved in the demonstration of the physical skill are subject to an action associated with the physical skill.

For example, in the case of the physical skill is pouring a content of a bottle into a glass, the glass is an object involved in the demonstration that is subject to the action of pouring that is associated with the physical skill. For example, in the case of the physical skill is cutting an apple with a knife, the apple is an object involved in the demonstration that is subject to the action of cutting that is associated with the physical skill.

The system may be configured to perform similarity considerations on the knowledge base by selecting the one or more new objects such that the one or more new objects have at least one of a semantic similarity, a physical similarity, and one or more similar attributes compared to the one or more objects involved in the demonstration of the physical skill.

A semantic similarity may be a number of edges in a knowledge graph. For example, the knowledge base may be represented by a knowledge graph. A first object known by the knowledge base may be represented by a node and a second object known by the knowledge base may be represented by a further node. For example, in case the node and the further node have a similar number of edges between nodes (e.g. similar path lengths) they may have a semantic similarity, i.e. they may be similar according to the knowledge base. A physical similarity may comprise one or more physical features (may be referred to as physical properties) that are similar for the new object(s) and the object(s) involved in the demonstration of the physical skill. The one or more physical features may comprise shape, size, material, color, weight, texture, hardness, softness, affordance etc. of the respective object(s). An example of a physical similarity between two objects is a similar appearance. For example, an apple and a peach have a similar appearance (i.e. a physical similarity) and, thus, the peach may be selected as a new object in case the apple is involved in the demonstration of the physical skill (e.g. demonstrating how an apple may be cut using a knife). The apple and the peach may have a physical similarity because they have a similar shape, similar hardness and similar size as similar physical features. The apple and the peach may have a similar attribute with regard to the kind of food they represent, because they are both fruits. For example, a cup and a pitcher may have a physical similarity in that both have a handle for a grasping action and both have pouring locations, i.e. locations at which a liquid may be filled in the cup or pitcher, or poured out of the cup or pitcher.

In other words, the system may be configured to generate a hypothesis of using the physical skill with regard to one or more new objects that are similar to one or more objects involved in the demonstration of the physical skill, and that are known by the knowledge base by selecting the one or more new objects such that the one or more new objects have at least one of a semantic similarity, a physical similarity and one or more similar attributes compared to the one or more objects involved in the demonstration of the physical skill.

Optionally, the one or more objects involved in the demonstration of the physical skill are used by an action associated with the physical skill.

For example, in the case of the physical skill of pouring a content of a bottle into a glass, the bottle is an object involved in the demonstration that is used by the action of pouring that is associated with the physical skill. For example, in the case of the physical skill is cutting an apple with a knife, the knife is an object involved in the demonstration that is used by the action of cutting that is associated with the physical skill.

The system may be configured to perform similarity considerations on the knowledge base by selecting the one or more new objects such that the one or more new objects have at least one of a semantic similarity, a physical similarity, one or more similar attributes, and a similar effect compared to the one or more objects involved in the demonstration of the physical skill.

For example, a knife and a saw have a physical similarity (e.g. similar appearance) and, thus, the saw may be selected as a new object in case the knife is involved in the demonstration of the physical skill (e.g. demonstrating how an apple may be cut using a knife). The knife and the saw may have a similar attribute with regard to being sharp. The knife and the saw may have a similar effect because they both may be used for separating an element into two pieces (e.g. cutting the element into two pieces). The knife and the saw may have a semantic similarity in that they have a similar function of being used for cutting objects. Thus, the knife and saw may have a physical similarity, a semantic similarity and a similar attribute of being sharp.

In other words, the system may be configured to generate a hypothesis of using the physical skill with regard to one or more new objects that are similar to one or more objects involved in the demonstration of the physical skill, and that are known by the knowledge base by selecting the one or more new objects such that the one or more new objects have at least one of a semantic similarity, a physical similarity, one or more similar attributes, and a similar effect compared to the one or more objects involved in the demonstration of the physical skill.

Optionally, multiple objects are involved in the demonstration of the physical skill. In the aforementioned case, the objects involved in the demonstration of the physical skill may be one or more objects that are subject to an action associated with the physical skill and/or one or more objects that are used by an action associated with the physical skill.

Generally, the hypothesis could be communicate by any modality, e.g., test on a screen, gesture, speech. However, according to a preferred embodiment, the system is configured to present the hypothesis using a holographic representation of the one or more new objects. For example, the system may comprise augmented reality (AR) glasses wearable by the human user. The AR glasses may be configured to represent the hypothesis using a holographic representation of the one or more new objects. Such representation may preferably be combined with a speech output.

For example, the system may be configured to present the hypothesis by generating an AR holographic animation of the hypothesis, i.e. of using the physical skill (demonstrated by the human user) in a different context compared to a context of the demonstration.

The system may comprise a screen presenting the hypothesis using a representation of the one or more new objects The system may be configured to generate an animation of the hypothesis and present the animation on the optional screen.

The system may be configured to provide information on the hypothesis using sound. For example, the system may comprise one or more loudspeakers for verbally presenting the hypothesis to the user. The aforementioned examples of visual presenting the hypothesis and verbally presenting the hypothesis to the human user may be combined.

Optionally, the system is configured to receive the confirmation or the refusal by detecting an acting by the human user on the holographic presentation.

For example, a confirmation button and a refusal button may be shown in the AR or on the screen.

Optionally, the system is configured to receive the confirmation or the refusal by detecting a sorting of the one or more new objects into categories. Optionally, the system is configured to receive the confirmation or the refusal by detecting a swiping, by the human user, of the one or more new objects.

The system may be configured to output one or more attributes of the one or more new objects, and detect a selection, by the human user, of an object with an attribute of the one or more attributes among the one or more new objects. The system may be configured to extend the confirmation or refusal of the hypothesis for the selected object with the attribute to other objects known by the knowledge base that comprise this attribute.

The system may be configured to visualize at least one of a semantic similarity, a physical similarity, one or more similar attributes, and a similar effect of the one or more new objects with regard to the one or more objects involved in the demonstration of the physical skill.

For this, the system may comprise a screen and/or AR glasses. Optionally, the system may be configured to visualize the aforementioned information by generating an AR holographic animation.

The system is configured to query, from the human user, a reason for the confirmation or refusal in response to receiving the confirmation or refusal, respectively; receive the reason from the human user; and update the knowledge base according to the received reason.

For example, in case of receiving a refusal for a hypothesis proposing to use a knife (used for cutting an apple in the demonstration of the physical skill of cutting) for cutting a coconut, the system may query, from the human user, a reason for the refusal. The system may receive as a reason for the refusal that the coconut is too hard for being cut with the knife. The knowledge base may be updated according to the reason, e.g. by adding the attribute "being hard" and/or "being too hard to be cut with knife" to the object "coconut" as a semantic relation.

In order to achieve the robot system according to the first aspect of the invention, some or all of the above described optional features may be combined with each other.

According to a second aspect of the invention, a method for learning one or more new semantic relations in a knowledge base of physical skills is provided. The method comprises obtaining knowledge on a physical skill by observing a demonstration, by a human user, of the physical skill, and updating the knowledge base with the obtained knowledge. The method comprises generating a hypothesis of using the physical skill in a different context compared to a context of the demonstration by performing similarity considerations on the knowledge base using the obtained knowledge, and presenting the hypothesis to the human user. The method comprises receiving a confirmation or a refusal from the human user with regard to the presentation of the hypothesis to the human user, and updating the knowledge base according to the hypothesis in case of receiving the confirmation or discard the hypothesis in case of receiving the refusal.

The method further comprises querying, from the human user, a reason for the confirmation or refusal in response to receiving the confirmation or refusal, respectively, receiving the reason from the human user, and updating the knowledge base according to the received reason.

The above description with regard to the robot system according to the first aspect of the invention is also valid for the method according to the second aspect of the invention. In particular, the optional features of the robot system according to the first aspect of the invention are also valid for the method according to the second aspect.

The method according to the second aspect achieves the same advantages as the robot system according to the first aspect.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. In the following, the invention is described exemplarily with reference to the enclosed Figures, in which
- **Figure 1**: schematically shows a function of an example of a robot system according to the invention for learning one or more new semantic relations in a knowledge base of physical skills;
- **Figure 2**: schematically shows an example of a knowledge on a physical skill that may be obtained by the robot system of Figure 1;
- **Figure 3**: shows a flow diagram of an example of a method according to the invention for learning one or more new semantic relations in a knowledge base of physical skills;
- **Figure 4**: shows an example of a system architecture of an optional implementation form of the system of Figure 1;
- **Figure 5**: shows an example of a use case of the system of Figure 1; and
- **Figure 6**: shows an example of a use case of the system of Figure 1.
- **Figure 7**: shows an example of a use case of the system of Figure 1.

In the Figures, corresponding elements may have the same reference signs.

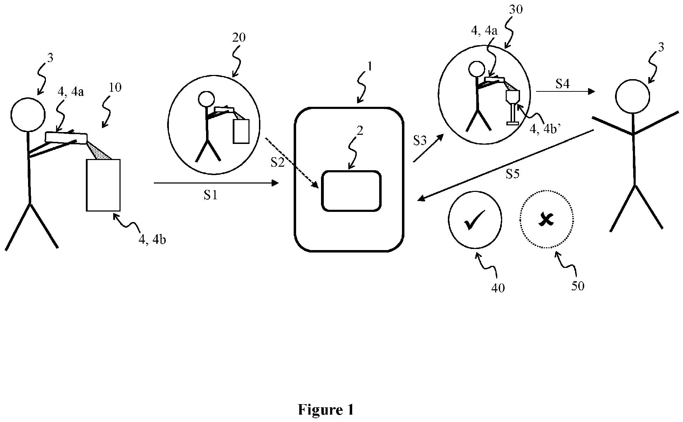

**Figure 1** schematically shows a function of an example of a robot system according to the invention for learning one or more new semantic relations in a knowledge base of physical skills. The robot system of Figure 1 is an example of the robot system according to the first aspect. The description of the robot system of the first aspect is correspondingly valid for the robot system of Figure 1.

The robot system 1 of Figure 1 is a robot system for learning one or more new semantic relations in a knowledge base 2 of physical skills. The robot system 1 may be or may comprise a robot, such as an assistive robot (not shown in Figure 1). According to the example of Figure 1, the robot system 1 comprises the knowledge base 2 (e.g. stored in a storage of the system 1). In addition or alternatively, the knowledge base 2 may be stored in one or more external storages that may be accessed by the system 1. The system 1 is configured to obtain knowledge 20 on a physical skill by observing a demonstration 10, by a human user 3, of the physical skill. The step of obtaining the knowledge 20 on the demonstrated physical skill is labelled in Figure 1 with the reference sign "S1". According to the example of Figure 1, the physical skill demonstrated by the user 3 is pouring a content of a bottle 4, 4a into a water glass 4, 4b. The system is configured to update the knowledge base 2 with the obtained knowledge 10. This step is labelled in Figure 1 with the reference sign "S2".

The system 1 is configured to generate a hypothesis 30 of using the physical skill in a different context compared to a context of the demonstration 10 by performing similarity considerations on the knowledge base 2 using the obtained knowledge 20. The step of generating the hypothesis 30 is labelled in Figure 1 with the reference sign "S3". As shown in Figure 1, the hypothesis 30 of using the physical skill in a different context compared to a context of the demonstration 10 comprises pouring a content of a bottle 4, 4a into a wine glass 4, 4b'. The system 1 is configured to present the hypothesis 30 to the human user 3. This step is labelled in Figure 1 with the reference sign "S4". The system 1 is configured to receive a confirmation 40 or a refusal 50 from the human user 3 with regard to the presentation of the hypothesis 30 to the human user 3. This step is labelled in Figure 1 with the reference sign "S5". Since pouring the content of the bottle 4, 4a in the wine glass 4, 4b' is possible, the human user 3 will provide a confirmation 40 with regard to the presentation of the hypothesis 30 to the robot system 1. The system 1 is configured to update the knowledge base 2 according to the hypothesis 30 in case of receiving the confirmation 40 or discard the hypothesis 30 in case of receiving the refusal 50.

The physical skill shown in Figure 1 is only by way of example for describing the function of the robot system 1. Thus, the description is correspondingly valid in case of the human user 3 demonstrating a different physical skill.

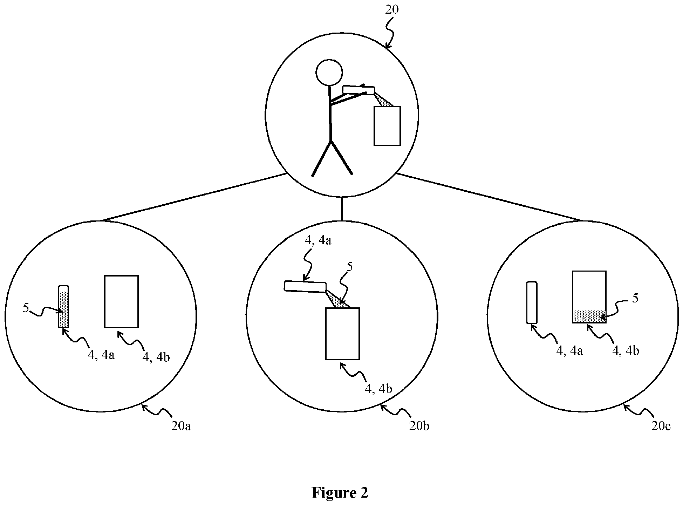

For further details on the robot system 1 or optional features of the robot system 1 reference is made to the description of the robot system according to the first aspect and the description of Figures 2 to 6.

**Figure 2** schematically shows an example of a knowledge on a physical skill that may be obtained by the robot system of Figure 1.

As shown in Figure 2, the obtained knowledge 20 on the physical skill may comprise knowledge 20a on a precondition associated with the physical skill, knowledge 20b on an action associated with the physical skill, and knowledge 20c on an effect that results from the precondition and the action. The precondition associated with the physical skill of pouring a content 5 of the bottle 4, 4a into the glass 4, 4b may comprise that the bottle 4, 4a is filled with the content 5. An action associated to the physical skill may be pouring the content 5 of the bottle 4, 4a into the glass 4, 4b. The effect resulting from the aforementioned precondition and the aforementioned action may comprise that the glass 4, 4b is filled with the content 5 of the bottle 4, 4a.

As shown in Figure 2, the knowledge 20a on the precondition associated with the physical skill may comprise knowing that the bottle 4, 4a and the glass 4, 4b are present (as an initial state of objects 4 involved in the demonstration 10 of the physical skill) and the bottle 4, 4a is filled with the content 5 (as an initial state of an attribute of the objects) before the demonstration 10. The knowledge 20b on the action associated with the physical skill may comprise pouring the content 5 of the bottle 4, 4a from the bottle 4, 4a into the glass 4, 4b (as knowledge on an action performed during the demonstration with regard to the objects 4 involved in the demonstration 10 of the physical skill). The knowledge 20c on the effect may comprise knowing that the bottle 4, 4a and the glass 4, 4b are present (as a final state of the objects 4 involved in the demonstration 10 of the physical skill) and the glass 4, 4b is filled with the content 5 (as a final state of an attribute of the objects) after the demonstration 10.

According to the example of Figures 1 and 2, the objects 4 involved in the demonstration 10 of the physical skill comprises with the glass 4, 4b an object 4b that is subject to the action of pouring a content 5 of the bottle 4, 4a associated with the physical skill. Namely, the content 5 of the bottle 4, 4a is poured into the glass 4, 4b. The objects 4 involved in the demonstration 10 of the physical skill comprises with the bottle 4, 4a an object 4a that is used by the action of pouring a content 5 of the bottle 4, 4a associated with the physical skill. Namely, the content 5 of the bottle 4, 4a is poured into the glass 4, 4b.

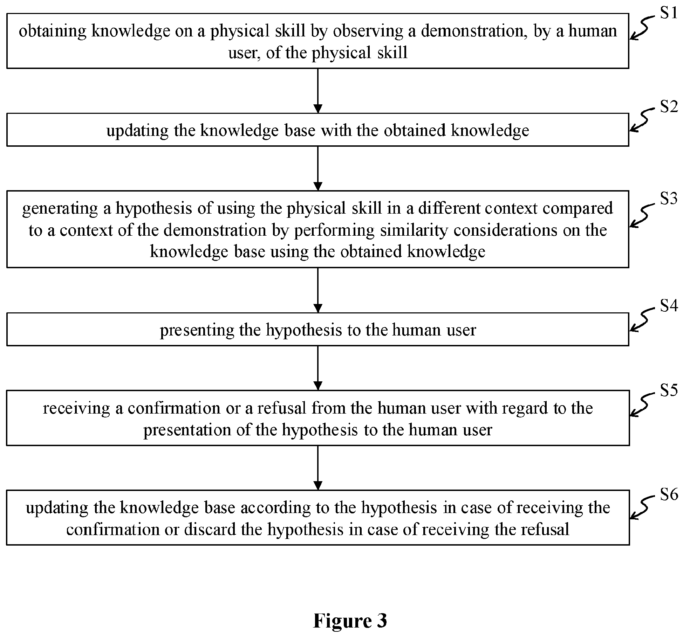

**Figure 3** shows a flow diagram of an example of a method according to the invention for learning one or more new semantic relations in a knowledge base of physical skills. The method of Figure 3 is an example of the method according to the second aspect. The description of the method according to the second aspect is correspondingly valid for the method of Figure 3.

The method of Figure 3 is a method for learning one or more new semantic relations in a knowledge base of physical skills. The method comprises, in a step S1, obtaining knowledge on a physical skill by observing a demonstration, by a human user, of the physical skill, and, in a step S2 following the step S1, updating the knowledge base with the obtained knowledge. The method comprises, in a step S3 following the step S2, generating a hypothesis of using the physical skill in a different context compared to a context of the demonstration by performing similarity considerations on the knowledge base using the obtained knowledge, and, in a step S4 following the step S3, presenting the hypothesis to the human user. The method comprises, in a step S5 following the step S4, receiving a confirmation or a refusal from the human user with regard to the presentation of the hypothesis to the human user, and, in a step S6 following the step S5, updating the knowledge base according to the hypothesis in case of receiving the confirmation or discard the hypothesis in case of receiving the refusal.

The robot system 1 of Figure 1 may be configured to perform the method of Figure 3. For further details on the method or optional features of the method reference is made to the description of the robot system according to the first aspect and the description of the method according to the second aspect.

In the light of the above, the robot system and the method according to examples of the invention structure a skill learning process (e.g. learning one or more new semantic relations in a knowledge base of physical skills) into two different stages. In a first stage, the human user may teach a new skill (i.e. physical skill) and/or capability to the robot system in a LfD sense (i.e. the human demonstrates, and the system observes). The system may acquire (i.e. obtain) information on the demonstrated action using its sensors and perception. After this, the second learning stage starts. In this second stage, the system may create one or more hypotheses on how the physical skill may be applied differently based on its knowledge base including any information at least on actions, effects of actions and/or objects that the system already has. That is, the robot system may generate a hypothesis of using the physical skill (that was demonstrated by the human user) in a different context compared to the context of the demonstration. For this, the robot system may perform similarity considerations on the knowledge base using the obtained knowledge on the physical skill that was demonstrated by the human user. The different context may comprise using one or more new objects for performing the physical skill that was demonstrated by the human user that are different to one or more objects used by the demonstrated physical skill. In addition or alternatively, the different context may comprise using one or more new objects to which the demonstrated physical skill is applied that are different compared to one or more objects to which the demonstrated physical was applied. Thus, objects may be used as tools or be subject to an action and/or treatment with a tool. In more complex sequences of action, combinations thereof are possible. An object that is used by a physical skill may be referred to as "tool".

The generated one or more hypotheses may then be communicated to the user (e.g. verbally, and/or using augmented reality) for confirmation or rejection. The terms "refusal" and "rejection" are used as synonyms. The user response (confirmation or rejection) may be used by the robot system to update the robot's knowledge, i.e. update the knowledge base. The robot system may either ask a single hypothesis using speech output. The robot system may, by leveraging an augmented reality (AR) setup, ask many hypotheses at once, where the AR setup provides an efficient and intuitive interface for the user to confirm/reject many hypotheses at once and spans the hypotheses space. This further accelerates the learning process.

Here are two examples of how the robot system and the method described above may be used with regard to learning knowledge on one or more physical skills: The user may teach the robot system how to cut an apple using a knife. The robot system may create the hypothesis that all fruits are cuttable with the knife, because the robot systems knows that an apple is a fruit. That is, in the aforementioned example it is assumed that the knowledge base comprises the knowledge that an apple is a fruit (e.g. a semantic relation of the knowledge base associates the attribute "being a fruit" to the object "apple").

According to an example, the following may be performed by the robot system: The robot system may ask the user if a coconut can also be cut. In other words, the robot system, which has observed the human user demonstrating the physical skill of cutting an apple with a knife, may generate the hypothesis of using the observed physical skill in a different context. In the aforementioned example, the different context comprises applying the physical skill of cutting with a knife to a new object being a coconut compared to the previous object "apple" involved in the demonstration of the physical skill. The robot system may derive this hypothesis from the knowledge that a coconut is also a fruit. That is, the knowledge base may comprise the knowledge that a coconut is a fruit (e.g. a sematic relation of the knowledge base associates the attribute "being a fruit" to the object "coconut"). Thus, when performing similarity consideration on the knowledge base using the obtained knowledge of the observed physical skill, the robot system may determine that the knowledge base associates to the object "apple" and the object "coconut" the attribute "being a fruit". Thus, the robot system may determine that the objects "apple" and "coconut" are similar to each other and, thus, the attribute "being cuttable by a knife" that is learned from the demonstration of the physical skill of cutting an apple by a knife and associated to the object "apple" (due to the updating of the knowledge base with the obtained knowledge by observing the aforementioned demonstration) may also be associated to the object "coconut". As a result, the robot system may generate the aforementioned hypothesis asking the user whether a coconut may be cut by a knife. The user (knowing that a knife cannot cut a coconut) negates this question. The robot system may store this new information. For this, the robot system may discard the hypothesis and optionally store that the hypothesis has been negated. So the system's knowledge base may be enhanced and now includes the information (i.e. knowledge) that a coconut cannot be cut using a knife. As an optional extension, the interaction between the robot system and the human user can be continued in form of a dialogue, where the robot system queries the reason for a confirmation or negation and incorporates it into its knowledge base, additionally. For example, the robot system may ask: "Why can a coconut not be cut?". The human user may respond: "Because it is hard". This response may lead the system to understand that an object, such as a coconut, with the property "hard" cannot be cut with a knife. In other words, the system may be configured to query, from the human user, a reason for the confirmation or refusal in response to receiving the confirmation or refusal, respectively: receive the reason from the human user: and update the knowledge base according to the received reason. However, in case that for a saw the system knows due to its knowledge base that the saw can be used for hard objects, a new hypothesis might be generated by the robot system.

According to another example, the following may be performed by the robot system: The robot system may present many different fruits using an augmented reality (AR) setup to visualize the generated hypothesis. For example, it may be assumed again that cutting of an apple with a knife was demonstrated as a physical skill by a human user. In this case, the robot system may generate a hypothesis of using the physical skill of cutting with a knife with regard to a banana, a peach, and a coconut, i.e. for cutting each of the aforementioned fruits. For this, the robot system may generate an AR setup showing holographic representations of the banana, a peach and a coconut and asking the hypothesis of using the physical skill of cutting with a knife for the banana, peach and coconut. The robot system may do this by verbally asking "Can a knife cut the shown fruits". In addition or alternatively, the robot system may ask the hypothesis visually by showing in the AR setup a holographic representation of a knife in addition to the holographic representations of the fruits and optionally showing curves or arrows from the holographic representation of the knife to each of the holographic representations of the fruits. The robot system may visually show in the AR setup the question of whether the shown knife can cut the shown fruits. For the user to respond, i.e. confirm or reject the hypothesis with regard to each of the shown fruits, the robot system may generate in the AR setup a confirmation region and a refusal region that are spatially separated from each other. These two regions may be distinguishable due to a labelling and/or coloring (e.g. confirmation region being green and refusal region being red). This allows a user confirming the hypothesis for a fruit (e.g. peach) suited for being cut with a knife by moving the holographic representation of that fruit (e.g. peach) into the confirmation region and refusing the hypothesis for a fruit (e.g. coconut) unsuited for being cut with a knife by moving the holographic representation of that fruit (e.g. coconut) into the refusal region. That is, the robot system may be configured to receive the confirmation or the refusal by detecting a sorting of new objects that are, according to the hypothesis, subject of the action ("cutting") of the physical skill into categories (e.g. suited for being cut with a knife, and unsuited for being cut with a knife). Optionally, the robot system may be configured to receive the confirmation or refusal detecting a swiping, by the human user, of the new objects (i.e. a swiping of the holographic representations of the new objects) e.g. into the confirmation region or the refusal region. Thus, a user can confirm/reject the proposed new objects (e.g. the banana, peach and the coconut) for the demonstrated physical skill of cutting with a knife, for example, by sorting them (e.g. their holographic representations) in AR spatially into a confirmation region and a refusal region (may be refered to as reject region).

Alternatively, the robot system may determine that the hypothesis is refused for one or more of the proposed new objects (e.g. banana, peach and coconut) by recognizing a 'deactivating' of the one or more new objects through 'clicking', by the user, all objects that should be rejected. That is, the system may be configured to receive the confirmation or the refusal by detecting an acting by the human user on the holographic presentation. This acting may be a selection of, e.g. by clicking on, the respective holographic presentation.

Considering robot active learning, usually robots ask the teacher to provide labels for new instances or about movement parameters/ trajectories. However, these systems do not ask questions in the context of semantic learning from demonstration.

Augmented reality has been recently increasingly used in robotics but typically for debugging by trained experts, visualizing internal states and movement intention, teleoperation, and for simplifying learning by demonstration of trajectories. However, using AR has not been proposed in symbolic/semantic learning.

In contrast to prior art, the proposed robot system and method aims at simplifying, accelerating, and improving the experience of teaching a robotic system in a human-robot-interaction scenario by combining curious question generation based on one or more hypotheses, preferably with a multi-modal interface provided by AR or at least direct interaction between a human, preferably the teacher, using for example a dialogue. Preferably, the method leverages the use of AR to communicate the robot hypotheses on multiple channels (speech, real-world grounded AR visualizations), and for intuitive interaction enabling to answer multiple hypotheses at once or providing additional details.

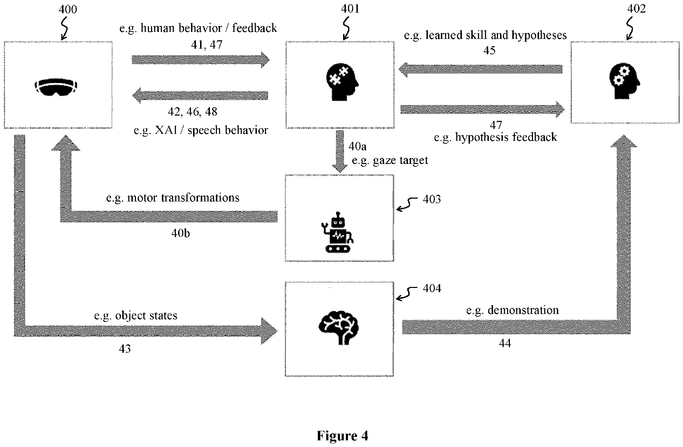

The invention relies on several hardware and software modules carrying out specific functionalities and exchanging processed information among them. **Figure 4** shows an example of a system architecture of an optional implementation form of the system of Figure 1. In particular, Figure 4 shows a system architecture in which functional modules are represented as squares labelled with reference signs 400, 401, 402, 403 and 404. In Figure 4, exchanged information is depicted along arrows and denoted with reference signs 41 to 48, 40a and 40b.

The robot system may comprise AR glasses 400 (e.g. Hololens) for an AR setup to visually communicate with a human user (e.g. visually present a hypothesis of using a physical skill in a different context). The robot system may further comprise a behavior engine module 401, a robot control system (RCS) 403, an episodic memory module 404, and a learning module 402. The behavior engine module 401, a robot control system (RCS) 403, an episodic memory module 404, and a learning module 402 may be part of a robot, e.g. assistive robot. The robot system, thus, may comprise the AR glasses 400 and a robot, e.g. assistive robot, configured to learn a semantic relation in a knowledge base of physical skills. At least one of the behavior engine module 401, robot control system (RCS) 403, episodic memory module 404, and learning module 402 may be an external entity that is not part of the robot, but may be accessed by the robot. The respective external entity may be coupled or attached to the robot. At least one, optionally two or more, of the behavior engine module 401, robot control system (RCS) 403, episodic memory module 404, and learning module 402 may be part of a control unit. The control unit may comprise at least one of a processor, microprocessor, controller, microcontroller, application specific integrated circuit (ASIC) and field programmable gate array (FPGA).

For example, the teacher's behavior 41 in Figure 4 during the task demonstration may be collected through the AR glasses 400 (e.g., Hololens). These are responsible for visualizing virtual objects, recognizing the user's speech input, and recognizing manipulation actions on the (real/virtual) objects. That is, a human user may demonstrate a physical skill to the robot system using the AR glasses 400. This is only by way of example and may be implemented differently. For example, the demonstration of physical skill may be demonstrated by the user in real life and the robot may comprise one or more sensors for observing that demonstration in order to obtain knowledge on the demonstrated physical skill. The system may represent each step in the demonstration as a triplet <state_t-1, action_t, state_t> of information. The information "state_t-1" is a description of the objects in the world and their attributes 43 before the action (initial state), while the information "state_t" denotes the state of the world (objects and attributes) immediately following the action (final state, target state). For example, the information "action_t" may represent a skill (e.g., "use the toaster") or a single atomic action (e.g., "pick up bread") and it may be labeled explicitly by the user via speech during teaching.

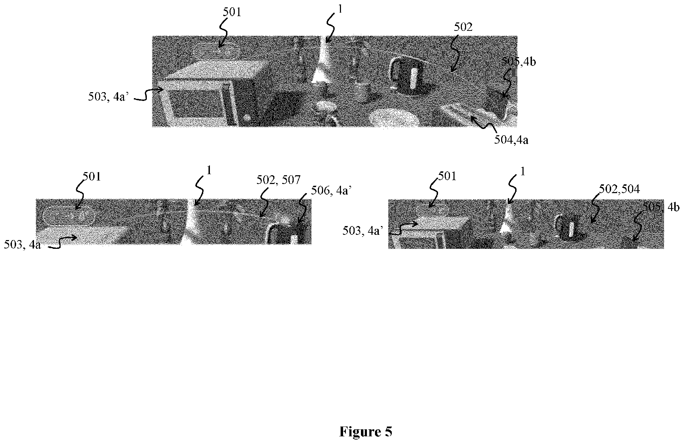

The episodic memory module 404 may start to store such triplets 43 when a starting command is given by the user with the corresponding label (e.g., 'learn use the toaster'). As soon as a command denoting the end of the demonstration ('stop learning') is recognized the collected information 44 perceived during the demonstration is passed on to the learning module 402, which uses it to update its internal knowledge graph (i.e. knowledge base) and may generalize the newly acquired knowledge in order to generate a hypothesis. The new hypothesis is formulated to reduce the uncertainty about objects that are considered similar to the ones demonstrated according to a specific similarity score, which is derive from information on the objects already present in the knowledge base. For instance, upon learning that bread can be heated in the toaster, the robot system may detect that a bagel is also a baked food (information included in the knowledge base) and may hypothesize that a bagel can also be heated by the toaster. Such hypotheses, along with a description of the learned skill45, may then be passed on to the behavior engine module 401. This module is responsible, on the one hand, for generating the social cues 42 that the robot may displays during the demonstration (executed by the robot control system 403 or visualized by a head-mounted AR / VR device, e.g. the AR glasses 400), but also to handle the human-robot interaction during the following hypothesis-driven questioning. The formulated hypothesis is preferably both uttered by the robot and the involved objects (e.g., toaster, bagel) visualized by communicating to the head-mounted AR / VR device (e.g. AR glasses 400) and a graphical engine which objects to highlight (46 in Figure 4, but see also Figure 5). At this point the user's feedback 47 may be collected and communicated back 47 to the learning module 402 via the behavior engine module 401. This latter may also issues a command to the virtual engine to display a positive/negative visualization acknowledging the human feedback 48. The learning module 402 may finally extend and consolidate its knowledge about heating food in the toaster without observing a specific additional demonstration. The reference sign 40a may represent a gaze target, and the reference sign 40b may represent motor transformations.

**Figure 5** shows an example of a use case of the system of Figure 1. In particular, Figure 5 shows a visualization of a new question, i.e. a new hypothesis of using a demonstrated physical skill in a different context, (on the top of Figure 5) asked by the robot system, e.g. its robot. The involved objects (e.g. bread and microwave), i.e. the objects that are used by the physical skill (e.g. heating) according to the hypothesis may be highlighted. A positive or negative answer (i.e. a confirmation or refusal) by the user may be acknowledged by a green or red graphical element (e.g. curve, arrow), respectively (shown on the bottom left (confirmation) or bottom right (refusal) of Figure 5).

For example, at the top of Figure 5, it is assumed that the physical skill demonstrated to the robot system 1 was heating a toast 505 with a toaster 504. It is assumed that the robot system generates the hypothesis of using a microwave 503 for heating the toast 505. Thus, the hypothesis proposes to use the same object 4b (i.e. the toast 505) that was subject to the demonstrated physical skill (i.e. heating) but use a new object 4a' (the microwave 503) for performing the physical skill (i.e. heating) compared to the object 4a (the toaster 504) involved in the demonstration of the physical skill. For visualizing the hypothesis, the robot system may generate in an AR setup a curve or arrow that goes from a holographic representation of the toast 505 to a holographic representation of the microwave 503. The physical skill of heating may be shown in the form of text associated to the curve/arrow (e.g. "Is heating possible") and/or in form of a pictogram 501 representing the action of "heating". For example, the pictogram 501 of Figure 5 used for the action of "heating" may be a symbol of a thermometer that is shown two times, wherein a left thermometer is blue (i.e. an temperature icon representing a colder state), the right thermometer is red (i.e. an temperature icon representing a warmer state) and an arrow extends from the left thermometer to the right thermometer to indicate the action "heating". This example of visualizing a hypothesis may be confirmed (i.e. the hypothesis may be confirmed) when the user performs an action, e.g. clicks, on the curve/arrow 502, and/or presses an optional confirmation button shown in the visualization (not shown in Figure 5). The user may refuse this hypothesis by performing a different action (e.g. clicking twice or swiping away) on the curve/arrow 502, and/or pressing an optional refusal button shown in the visualization (not shown in Figure 5).

In the bottom right of Figure 5, an example of a feedback to the user is shown, with regard to the above described hypothesis, of which the visualization is exemplarily shown at the top of Figure 5, in case the user refuses the presented hypothesis. Namely, it is assumed that the user is of the opinion that a toast should not be heated by a microwave 503, because a normal microwave 503 can make the toast only hot, but not crispy as it is the case when using a toaster 504. To indicate to the user that the robot system 1 has received the refusal, the curve/arrow 502 may be disconnected from the microwave 503 and moved to a holographic representation of the robot system 1 and/or be turned into a red curve/arrow 504.

In the bottom left of Figure 5, an example of a feedback to the user is shown in case the user confirms the presented hypothesis. For this example, it is assumed that a physical skill demonstrated to the robot system 1 was heating water using a microwave 503 and the hypothesis presented to the user (by showing a curve/arrow 502 and the example of pictogram 501 for the action "heating") is using a kettle 506 for heating the water. Since it is possible to heat water using a kettle 506, the user confirms the hypothesis. To indicate to the user that the robot system 1 has received the confirmation, the curve/arrow 502 may flash at the holographic representation of the kettle 506 and/or be turned into a green curve/arrow 507.

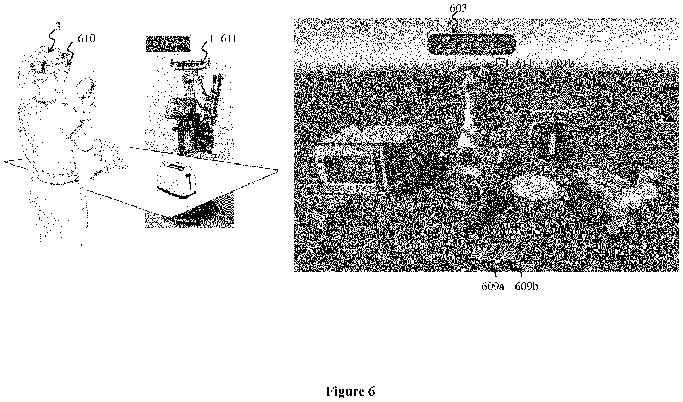

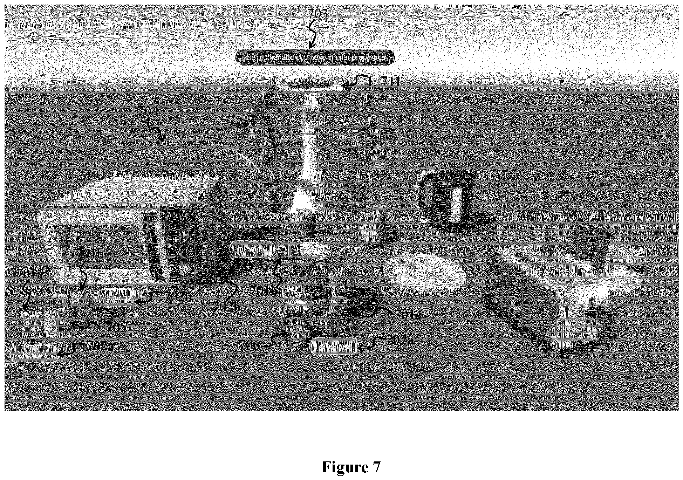

In the above description, any other representations for visualizing objects and other elements (e.g. in augmented reality (AR) and/or virtual reality (VR)) may be used instead of holographic representation(s). That is, the optional implementation forms of the invention are not limited to holographic representation(s) and the description is correspondingly valid in case of using different means of visualization. Thus, in the above description whenever the term "holographic representation" is used the term "visual representation" or "representation" may be used instead to generalize the description. This is also valid for the description of the other Figures, such as Figures 6 and 7.

**Figure 6** shows an example of a use case of the system of Figure 1. That is, an optional implementation of the robot system is depicted in Figure 6. As shown on the left of Figure 6, a human teacher 3 may wear a head-mounted augmented reality (AR) device 610. For example, the AR device 610 may be AR glasses (e.g. Hololens). The term "human user" may be used for referring to the human teacher. According to the example of Figure 6, the robot system 1 comprises a service robot 611 that is positioned at the opposite side of a table. That is, the robot system may comprise the robot 611 and optionally the AR device 610. Several objects and tools are positioned on the table (such as microwave 605, cup 606 with milk, cup 607 with tea, kettle 608 etc. shown on the right of Figure 6). The location of the objects and the pose of the human may be tracked for instance with a camera-based tracking system of the robot 611. The human teacher 3 now can teach a new skill to the robot by demonstrating it. The Figure 6 depicts on the left side for instance the skill of toasting a bread: For example, in a first learning stage, the teacher says: "Learn toasting bread". Using language processing methods, the robot system 1 (e.g. the robot 611) recognizes that it should learn the action "toasting" with the object "bread". It will observe the scene (i.e. the demonstrated physical skill) and record the start state of the scene (for instance bread in hand, bread cold, toaster empty). The teacher then puts the bread into the toaster and switches it on. After the bread is hot, the teacher announces: "Stop learning". The robot system 1 records the state at this moment of time (bread in toaster, bread hot). The system now learns a semantic representation of the action "toasting" with the instantiation of the object "bread".

In a second learning stage, the robot system 1 (e.g. robot 611) may create some hypothesis how to generalize usage of the tool (e.g. toaster) to different objects and/or usage of different tools to the same object (e.g. toast).

Creating some hypothesis how to generalize the usage of the tool to different objects (example case 1) may comprise: Based on its knowledge base, the robot system 1 may query objects that are similar to the object "bread", and which have not yet been observed in the context of the action (e.g. toasting). Similarity may be determined for instance as a semantic similarity (number of edges in a knowledge graph, number of edges between nodes in a knowledge graph etc.), based on appearance (something looks similar as bread), based on physical similarity (at least one of similar shape, similar size, similar color, similar affordance etc.) etc. The system 1 may then generate the hypothesis based on this similarity and suggest it to the human 3. For instance, if the most similar object is a bagel, it may ask "Can I toast a bagel?". The question may be accompanied by augmented reality displays that provide additional information to the user. The human teacher can now confirm (or reject) this hypothesis by verbally announcing it.

Creating some hypothesis how to generalize the usage of different tools to the same object (example case 2) may comprise: Based on its knowledge base, the robot system 1 may query other tools that according to the system's knowledge base might be capable to create the same effect as the tool (e.g. toaster) involved in the demonstration of the physical skill (e.g. toasting). For instance, it may create the hypothesis that the toast can be heated inside a microwave: "Can I heat the toast also in the microwave?". Again, the user can verbally confirm, reject, or not answer to this hypothesis.

In both above described examples (example cases 1 and 2), the robot's hypothesis may be communicated (i.e. repesented) to the human teacher 3 by means of several cues: While the robot 611 may verbally announce the hypothesis, augmented reality holograms (i.e. holographic representations) may be displayed in the AR device 610 (e.g. AR glasses) that the human 3 is wearing. These may comprise arrows that spatially relate the objects and tools, icons that display state changes (e.g. thermometer to indicate a change of temperature), and others. Optionally, the confirmation or rejection may be illustrated using AR animations and sounds. In addition, the robot 611 may communicate additional information about the acquired skill using its movement behavior, such as for instance gazing at the object of interest, pointing or gestur-ing with its hands.

The left side of Figure 6 is an illustration of a teaching situation with a human teacher 3, a robot 1 and a table with objects between them, e.g. as described above. The right side of Figure 6 is an illustration of AR holographic animations including at least one of spatial arrow(s) (e.g. line 604 connecting the cup 606 of milk and the kettle 608), temperature icon(s) 601a and text label(s) 603. The spatial arrow may be referred to as curve or arrow. For example, according to the right side of Figure 6, it may be assumed that a physical skill demonstrated by the human 3 to the robot 611 may be making a cup 606 of milk hot using the microwave 605. The knowledge base may comprise the knowledge that the kettle 608 may make tea of a cup 607 of tea hot. Moreover, the knowledge base may comprise the knowledge that milk and tea are similar in that they both are a drinkable beverage that may be served hot. Thus, the robot 611 may generate the hypothesis that a kettle 608 can make milk hot. This hypothesis as well as the reasoning by the robot 611 to come to the hypothesis may be shown in the form of a text label 603 in the AR visualization. Moreover, the hypothesis may be shown using a curve/arrow 604 pointing from a cup 606 of milk to a kettle 608, a first pictogram 601a representing "making milk hot" and a second pictogram 601b representing the task of "heating. The first pictogram may use the term "milk" pointed by an arrow to a red thermometer (i.e. a temperature icon representing a warm/hot state). The second pictogram 601b may use a symbol of a thermometer that is shown two times, wherein a left thermometer is blue (i.e. an temperature icon representing a colder state), the right thermometer is red (i.e. an temperature icon representing a warmer state) and an arrow extends from the left thermometer to the right thermometer to indicate the action "heating". In addition, a first button 609a ("yes") and a second button 609b ("no") may be shown in the AR visualization that may be pressed by the human teacher to confirm or refuse the presented hypothesis. This is only by example and confirmation and/or refusal of the hypothesis may be done differently, e.g. as already described herein. The hypothesis generation is based on the robot system's knowledge and may be implemented such that the answers to the question lead to an efficient reduction of the uncertainty of the knowledge the system has stored. Hypotheses are related to generalize the use of a demonstrated tools with respect to objects different than the objects used in the demonstrations, and to generalize an object with respect to tools different than the one demonstrated. An important aspect of this is the communication of the created hypotheses, which may be based on multiple communication cues:
For example, hypotheses of the usability of objects with a tool may be presented to the user by holographically highlighting them in the scene. Objects can be virtually swiped/sorted into categories with respect to a hypothesis. Attributes of the objects can be visualized and selected by the user to provide information for all objects that share the attribute.

The user can confirm or reject each of them using voice recognition, hand gestures or any combination of these.

**Figure 7** shows an example of a use case of the system of Figure 1. That is, an optional implementation of the robot system is depicted in Figure 7. The robot system of Figure 7 may be in line with the robot system of Figure 6 and, thus, the description of Figure 6 may be correspondingly valid. According to the example of Figure 7, the robot system 1 comprises a service robot 711 that is positioned at a table. Several objects and tools are positioned on the table (such as a cup 705, and a pitcher 706 shown in Figure 7). It may be assumed that the service robot 711 has already obtained the knowledge that the pitcher 706 may be used for pouring liquid contained in the pitcher out of the pitcher 706. This may comprise that the robot 711 has learned a semantic representation of the physical skill of pouring out a liquid using the pitcher 706 from a demonstration, by a human teacher, of said physical skill (i.e. observing the human teacher pouring out liquid using the pitcher 706). The semantic representation of the aforementioned physical skill may comprise the following two physical features of the pitcher 706: a grasping location 701a for grasping the pitcher 706 and a pouring location 701b, at which the liquid is poured out of the pitcher 706.

The robot 711 may use the physical skill of pouring out liquid, of which it obtained knowledge by observing how a liquid is poured out using the pitcher 706, in a different context compared to the context of the demonstration. For this, the robot 711 may use the physical skill with regard to one or more new objects that are similar to the pitcher 706 involved in the demonstration of the physical skill of pouring out a liquid and that are known by the knowledge base of the robot 711.

In the example of Figure 7, it is assumed that the cup 705 is known by the knowledge base of the robot 711. Thus, as indicated by the line 604 the robot 711 may perform similarity considerations on the knowledge base by selecting the cup 705 as a new object, because the cup 705 has a physical similarity compared to the pitcher 706 involved in the demonstration of the physical skill of pouring out a liquid. Namely, the cup 705 also comprise the following two physical features: a grasping location 701a for grasping the cup 705 and a pouring location 701b, at which the liquid is poured out of the cup 705. In other words, the physical similarity between the pitcher 706 and the cup 705 with regard to pouring out a liquid may comprise two physical features, namely a grasping location 701a and pouring location 701b that are similar for the cup 705 (i.e. the new object) and the pitcher 706 (i.e. the object involved in the demonstration of pouring out the liquid).

Thus, the robot 711 may generate the hypothesis that the cup 705 and the pitcher 706 have similar physical features, i.e. similar properties with regard to pouring a liquid. The system 1 may visualize this, e.g. on a screen or AR glasses. For example, Figure 7 exemplarily shows an illustration of AR holographic animations including a line 704 for indicating the two objects, i.e. the cup 705 and the pitcher 706, that have the similar physical features, text labels 702a, 702b and 703, and highlighting boxes 701a and 701b. The text label 703 may indicate that there are similar physical features. The text label 702a and highlighting box 701a may indicate the physical feature of the grasping location at each of the two objects 705 and 706, and the text label 702b and the highlighting box 701b may indicate the physical feature of the pouring location at each of the two objects 705 and 706.

For further information on the robot system of Figure 7, e.g. optional features and/or implementation forms, reference is made to the description of Figure 6.

The description of Figures 6 and 7 is correspondingly valid in the case of another robot type, i.e. the robot system comprising a robot that is different to a service robot.

The invention as described above may be specifically applicable in the following scenarios:
According to an example of a scenario, a robot system can be configured to be taught to prepare food with the users. There may be large varieties of food items and cooking appliances. The system can be taught by a particular user as a teacher to support cooking using user-specific types of food, as well as the particular cooking appliances available in a user's environment. The system can be used in home kitchen environments, in restaurants or canteens. In the latter one, it can be utilized as an assistive kitchen helper to support the kitchen staff. It can also be used in cooking demonstrations, attracting the attention of an audience for instance in a restaurant.

According to another example of a scenario, a robot system can be configured to be taught to prepare beverages, drinks and/or cocktails in a restaurant or bar. The variation in recipes, ingredients and tools to prepare cocktails and other beverages is similarly complex as compared to the cooking application.

According to a further example of a scenario, a robot system can be configured to support workshop staff for simple manipulation and repair tasks. For instance, the system can be trained to use a particular set of machine tools, power tools, etc. and then interactively learn from its user how to apply them to different work pieces.

To speed up an interactive learning process, the robot system may be equipped with the ability to ask curious questions about a skill and objects, i.e., creating hypotheses that can be presented to the user for confirmation or rejection. The hypotheses may be created by considering a certain skill and a list of candidate objects (at least one candidate object), e.g., the currently available objects in the environment. In order to ask meaningful questions, the hypotheses may be scored based on a confidence considering the similarity between new candidates and demonstrated object(s), using a predefined object-hierarchy. The hypothesis with the highest confidence is presented to the user, who can quickly confirm or reject it. Hypotheses with lower confidence may additionally be presented.

The presentation of the hypothesis and reception of a confirmation or rejection allows teaching additional knowledge to the robot system in an interactive and, in comparison to full skill demonstrations, faster way. For example, after seeing a demonstration to learn to use the microwave, where the teacher heated milk, the robot can ask whether a similar object (e.g., water) can be heated in the microwave. XAI virtual elements in this case would highlight the candidate object and the microwave and, after receiving the user's answer, signal with red/green particles the acknowledgement of the negative/positive answer.

In the above description of examples of the robot system and method according to the invention examples of physical skill(s), robot system(s), and objects used by the physical skills are given. These examples are only by way of example and do not limit the present invention. That is, the above description is correspondingly valid in case of at least one of a different physical skill as described, different robot system as described and one or more different objects (used by the physical skill and/or subject to the physical skill) as described above.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A robot system (1) for learning one or more new semantic relations in a knowledge base (2) of physical skills, the system (1) being configured to
- obtain (S1) knowledge (20) on a physical skill by observing a demonstration (10), by a human user (3), of the physical skill,
- update (S2) the knowledge base (2) with the obtained knowledge (20),
- generate (S3) a hypothesis (30) of using the physical skill in a different context compared to a context of the demonstration (10) by performing similarity considerations on the knowledge base (2) using the obtained knowledge (20),
**characterized in that** the system is further configured to
- present (S4) the hypothesis (30) to the human user (3),
- receive (S5) a confirmation (40) or a refusal (50) from the human user (3) with regard to the presentation (S4) of the hypothesis (30) to the human user (3), and
- update the knowledge base (2) according to the hypothesis (30) in case of receiving the confirmation (40) or discard the hypothesis (30) in case of receiving the refusal (50), wherein the system (1) is configured to
- query, from the human user (3), a reason for the confirmation (40) or refusal (50) in response to receiving the confirmation (40) or refusal (50), respectively, and
- receive the reason from the human user (3), and
- update the knowledge base (2) according to the received reason.

2. The robot system (1) according to claim 1, wherein
- the obtained knowledge (20) on the physical skill comprises
- knowledge (20a) on a precondition associated with the physical skill,
- knowledge (20b) on an action associated with the physical skill, and
- knowledge (20c) on an effect that results from the precondition and the action.

3. The robot system (1) according to claim 2, wherein
- the knowledge (20a) on the precondition associated with the physical skill comprises knowledge on an initial state of one or more objects (4, 4a, 4b) involved in the demonstration (10) of the physical skill and one or more attributes of the one or more objects (4, 4a, 4b) before the demonstration (10).

4. The robot system (1) according to claim 2 or 3, wherein
- the knowledge (20b) on the action associated with the physical skill comprises knowledge on an action performed during the demonstration (10) with regard to one or more objects (4, 4a, 4b) involved in the demonstration (10) of the physical skill.

5. The robot system (1) according to any one of claims 2 to 4, wherein
- the knowledge (20c) on the effect comprises knowledge on a final state of one or more objects (4, 4a, 4b) involved in the demonstration (10) of the physical skill and one or more attributes of the one or more objects (4, 4a, 4b) after the demonstration (10).

6. The robot system (1) according to any one of claims 2 to 5, wherein
- the system (1) is configured to obtain the knowledge (20b) on the action associated with the physical skill from the human user (3).

7. The robot system (1) according to any one of the previous claims, wherein
- using the physical skill in the different context compared to the context of the demonstration (10) comprises using the physical skill with regard to one or more new objects that are similar to one or more objects (4, 4a, 4b) involved in the demonstration (10) of the physical skill, and that are known by the knowledge base (2).

8. The robot system (1) according to claim 7, wherein the one or more objects (4, 4b) involved in the demonstration (10) of the physical skill are subject to an action associated with the physical skill.

9. The robot system (1) according to claim 7 or 8, wherein
- the system (1) is configured to perform similarity considerations on the knowledge base (2) by selecting the one or more new objects (4, 4b') such that the one or more new objects (4, 4b') have at least one of a semantic similarity, a physical similarity, and one or more similar attributes compared to the one or more objects (4, 4b) involved in the demonstration (10) of the physical skill.

10. The robot system (1) according to claim 7, wherein the one or more objects (4, 4a) involved in the demonstration (10) of the physical skill are used by an action associated with the physical skill.

11. The robot system (1) according to claim 7 or 10, wherein
- the system (1) is configured to perform similarity considerations on the knowledge base (2) by selecting the one or more new objects such that the one or more new objects have at least one of a semantic similarity, a physical similarity, one or more similar attributes, and a similar effect compared to the one or more objects (4, 4a) involved in the demonstration (10) of the physical skill.

12. The robot system (1) according to any one of claim 7 to 11, wherein
- the system (1) is configured to present the hypothesis (30) using a holographic representation of the one or more new objects (4, 4b').

13. The robot system (1) according to claim 12, wherein
- the system (1) is configured to receive (40) the confirmation or the refusal (50) by detecting an acting by the human user (3) on the holographic presentation.

14. The robot system (1) according to claim 12 or 13, wherein
- the system (1) is configured to receive the confirmation (40) or the refusal (50) by detecting a sorting of the one or more new objects (4, 4b') into categories, optionally detecting a swiping, by the human user (3), of the one or more new objects (4, 4b').

15. The robot system (1) according to any one of claims 7 to 14, wherein the system (1) is configured to
- output one or more attributes of the one or more new objects,
- detect a selection, by the human user (3), of an object with an attribute of the one or more attributes among the one or more new objects, and
- extend the confirmation (40) or refusal (50) of the hypothesis (30) for the selected object with the attribute to other objects known by the knowledge base (2) that comprise this attribute.

16. The robot system (1) according to any one of claims 7 to 15, wherein the system is configured to visualize at least one of a semantic similarity, a physical similarity, one or more similar attributes, and a similar effect of the one or more new objects with regard to the one or more objects (4, 4a, 4b) involved in the demonstration (10) of the physical skill.

17. A method for learning one or more new semantic relations in a knowledge base of physical skills, wherein the method comprises
- obtaining (S1) knowledge on a physical skill by observing a demonstration, by a human user, of the physical skill,
- updating (S2) the knowledge base with the obtained knowledge,
- generating (S3) a hypothesis of using the physical skill in a different context compared to a context of the demonstration by performing similarity considerations on the knowledge base using the obtained knowledge,
**characterized in that** the method further comprises
- presenting (S4) the hypothesis to the human user,
- receiving (S5) a confirmation or a refusal from the human user with regard to the presentation of the hypothesis to the human user, and
- updating (S6) the knowledge base according to the hypothesis in case of receiving the confirmation or discard the hypothesis in case of receiving the refusal, wherein the method comprises
- querying, from the human user, a reason for the confirmation or refusal in response to receiving the confirmation or refusal, respectively, and
- receiving the reason from the human user, and
- updating the knowledge base according to the received reason.

## Patentansprüche

1. Robotersystem (1) zum Lernen einer oder mehrerer neuer semantischer Beziehungen in einer Wissensdatenbank (2) mit physischen Fertigkeiten, wobei das System (1) zu Folgendem ausgelegt ist
- Erhalten (S1) von Wissen (20) über eine physische Fertigkeit durch Beobachten einer Vorführung (10) der physischen Fertigkeit durch einen menschlichen Benutzer (3),
- Aktualisieren (S2) der Wissensdatenbank (2) mit dem erhaltenen Wissen (20),
- Erzeugen (S3) einer Hypothese (30) einer Verwendung der physischen Fertigkeit in einem anderen Kontext im Vergleich zu einem Kontext der Vorführung (10) durch Durchführen von Ähnlichkeitsbetrachtungen an der Wissensdatenbank (2) unter Verwendung des erhaltenen Wissens (20),
**dadurch gekennzeichnet, dass** das System ferner zu Folgendem ausgelegt ist
- Darstellen (S4) der Hypothese (30) für den menschlichen Benutzer (3),
- Empfangen (S5) einer Bestätigung (40) oder einer Ablehnung (50) von dem menschlichen Benutzer (3) in Bezug auf die Darstellung (S4) der Hypothese (30) für den menschlichen Benutzer (3), und
- Aktualisieren der Wissensdatenbank (2) gemäß der Hypothese (30) im Fall eines Empfangens der Bestätigung (40) oder Verwerfen der Hypothese (30) im Fall eines Empfangens der Ablehnung (50), wobei das System (1) zu Folgendem ausgelegt ist
- Abfragen eines Grundes für die Bestätigung (40) oder die Ablehnung (50) von dem menschlichen Benutzer (3) als Reaktion auf ein Empfangen der Bestätigung (40) bzw. der Ablehnung (50), und
- Empfangen des Grundes von dem menschlichen Benutzer (3), und
- Aktualisieren der Wissensdatenbank (2) gemäß dem empfangenen Grund.

2. Robotersystem (1) nach Anspruch 1, wobei
- das erhaltene Wissen (20) über die physische Fertigkeit Folgendes umfasst
- Wissen (20a) über eine mit der physischen Fertigkeit assoziierte Vorbedingung,
- Wissen (20b) über eine mit der physischen Fertigkeit assoziierte Aktion, und
- Wissen (20c) über eine Wirkung, die sich aus der Vorbedingung und der Aktion ergibt.

3. Robotersystem (1) nach Anspruch 2, wobei
- das Wissen (20a) über die mit der physischen Fertigkeit assoziierte Vorbedingung Wissen über einen Ausgangszustand eines oder mehrerer Objekte (4, 4a, 4b), die in die Vorführung (10) der physischen Fertigkeit einbezogen wurden, und ein oder mehrere Attribute des einen oder der mehreren Objekte (4, 4a, 4b) vor der Vorführung (10) umfasst.

4. Robotersystem (1) nach Anspruch 2 oder 3, wobei
- das Wissen (20b) über die mit der physischen Fertigkeit assoziierte Aktion Wissen über eine Aktion umfasst, die während der Vorführung (10) in Bezug auf ein oder mehrere Objekte (4, 4a, 4b) durchgeführt wird, die in die Vorführung (10) der physischen Fertigkeit einbezogen wurden.

5. Robotersystem (1) nach einem der Ansprüche 2 bis 4, wobei
- das Wissen (20c) über die Wirkung Wissen über einen Endzustand eines oder mehrerer Objekte (4, 4a, 4b), die in die Vorführung (10) der physischen Fertigkeit einbezogen wurden, und ein oder mehrere Attribute des einen oder der mehreren Objekte (4, 4a, 4b) nach der Vorführung (10) umfasst.

6. Robotersystem (1) nach einem der Ansprüche 2 bis 5, wobei
- das System (1) dazu ausgelegt ist, das Wissen (20b) über die mit der physischen Fertigkeit assoziierte Aktion von dem menschlichen Benutzer (3) zu erhalten.

7. Robotersystem (1) nach einem der vorhergehenden Ansprüche, wobei
- das Verwenden der physischen Fertigkeit in dem anderen Kontext im Vergleich zu dem Kontext der Vorführung (10) Verwenden der physischen Fertigkeit in Bezug auf ein oder mehrere neue Objekte umfasst, die einem oder mehreren Objekten (4, 4a, 4b) ähnlich sind, die in die Vorführung (10) der physischen Fertigkeit einbezogen wurden, und die aus der Wissensdatenbank (2) bekannt sind.

8. Robotersystem (1) nach Anspruch 7, wobei das eine oder die mehreren Objekte (4, 4b), die in die Vorführung (10) der physischen Fertigkeit einbezogen wurden, einer mit der physischen Fertigkeit assoziierten Aktion unterzogen werden.

9. Robotersystem (1) nach Anspruch 7 oder 8, wobei
- das System (1) dazu ausgelegt ist, Ähnlichkeitsbetrachtungen an der Wissensdatenbank (2) durch Auswählen des einen oder der mehreren neuen Objekte (4, 4b') durchzuführen, so dass das eine oder die mehreren neuen Objekte (4, 4b') eine semantische Ähnlichkeit, eine physische Ähnlichkeit und/oder ein oder mehrere ähnliche Attribute im Vergleich zu dem einen oder den mehreren Objekten (4, 4b) aufweisen, die in die Vorführung (10) der physischen Fertigkeit einbezogen wurden.

10. Robotersystem (1) nach Anspruch 7, wobei das eine oder die mehreren Objekte (4, 4a), die in die Vorführung (10) der physischen Fertigkeit einbezogen wurden, durch eine mit der physischen Fertigkeit assoziierte Aktion verwendet werden.

11. Robotersystem (1) nach Anspruch 7 oder 10, wobei
- das System (1) dazu ausgelegt ist, Ähnlichkeitsbetrachtungen an der Wissensdatenbank (2) durch Auswählen des einen oder der mehreren neuen Objekte durchzuführen, so dass das eine oder die mehreren neuen Objekte eine semantische Ähnlichkeit, eine physische Ähnlichkeit, ein oder mehrere ähnliche Attribute und/oder eine ähnliche Wirkung im Vergleich zu dem einen oder den mehreren Objekten (4, 4a) aufweisen, die in die Vorführung (10) der physischen Fertigkeit einbezogen wurden.

12. Robotersystem (1) nach einem der Ansprüche 7 bis 11, wobei
- das System (1) dazu ausgelegt ist, die Hypothese (30) unter Verwendung einer holographischen Darstellung des einen oder der mehreren neuen Objekte (4, 4b') darzustellen.

13. Robotersystem (1) nach Anspruch 12, wobei
- das System (1) dazu ausgelegt ist, die Bestätigung oder die Ablehnung (50) durch Detektieren einer Handlung durch den menschlichen Benutzer (3) an der holographischen Darstellung (40) zu empfangen.

14. Robotersystem (1) nach Anspruch 12 oder 13, wobei
- das System (1) dazu ausgelegt ist, die Bestätigung (40) oder die Ablehnung (50) durch Detektieren eines Einsortierens des einen oder der mehreren neuen Objekte (4, 4b') in Kategorien, optional Detektieren einer Wischbewegung an dem einen oder den mehreren neuen Objekten (4, 4b') durch den menschlichen Benutzer (3) zu empfangen.

15. Robotersystem (1) nach einem der Ansprüche 7 bis 14, wobei das System (1) zu Folgendem ausgelegt ist
- Ausgeben eines oder mehrerer Attribute des einen oder der mehreren neuen Objekte,
- Detektieren einer Auswahl eines Objekts mit einem Attribut des einen oder der mehreren Attribute aus dem einen oder den mehreren neuen Objekten durch den menschlichen Benutzer (3), und
- Ausdehnen der Bestätigung (40) oder der Ablehnung (50) der Hypothese (30) für das ausgewählte Objekt mit dem Attribut auf andere Objekte, die aus der Wissensdatenbank (2) bekannt sind und dieses Attribut umfassen.

16. Robotersystem (1) nach einem der Ansprüche 7 bis 15, wobei das System dazu ausgelegt ist, eine semantische Ähnlichkeit, eine physische Ähnlichkeit, ein oder mehrere ähnliche Attribute und/oder eine ähnliche Wirkung des einen oder der mehreren neuen Objekte in Bezug auf das eine oder die mehreren Objekte (4, 4a, 4b) zu visualisieren, die in die Vorführung (10) der physischen Fertigkeit einbezogen wurden.

17. Verfahren zum Lernen einer oder mehrerer neuer semantischer Beziehungen in einer Wissensdatenbank mit physischen Fertigkeiten, wobei das Verfahren Folgendes umfasst
- Erhalten (S1) von Wissen über eine physische Fertigkeit durch Beobachten einer Vorführung der physischen Fertigkeit durch einen menschlichen Benutzer,
- Aktualisieren (S2) der Wissensdatenbank mit dem erhaltenen Wissen,
- Erzeugen (S3) einer Hypothese einer Verwendung der physischen Fertigkeit in einem anderen Kontext im Vergleich zu einem Kontext der Vorführung durch Durchführen von Ähnlichkeitsbetrachtungen an der Wissensdatenbank unter Verwendung des erhaltenen Wissens,
**dadurch gekennzeichnet, dass** das Verfahren ferner Folgendes umfasst
- Darstellen (S4) der Hypothese für den menschlichen Benutzer,
- Empfangen (S5) einer Bestätigung oder einer Ablehnung von dem menschlichen Benutzer in Bezug auf die Darstellung der Hypothese für den menschlichen Benutzer, und
- Aktualisieren (S6) der Wissensdatenbank gemäß der Hypothese im Fall eines Empfangens der Bestätigung oder Verwerfen der Hypothese im Fall eines Empfangens der Ablehnung, wobei das Verfahren Folgendes umfasst
- Abfragen eines Grundes für die Bestätigung oder die Ablehnung von dem menschlichen Benutzer als Reaktion auf ein Empfangen der Bestätigung bzw. der Ablehnung, und
- Empfangen des Grundes von dem menschlichen Benutzer, und
- Aktualisieren der Wissensdatenbank gemäß dem empfangenen Grund.

## Revendications

1. Système robotique (1) d'apprentissage d'une ou de plusieurs nouvelles relations sémantiques dans une base de connaissances (2) de compétences physiques, le système (1) étant configuré pour
- obtenir (S1) des connaissances (20) sur une compétence physique par observation d'une démonstration (10), par un utilisateur humain (3), de la compétence physique,
- mettre à jour (S2) la base de connaissances (2) avec les connaissances (20) obtenues,
- générer (S3) une hypothèse (30) d'utilisation de la compétence physique dans un contexte différent par rapport à un contexte de la démonstration (10) par réalisation d'examens de similarité sur la base de connaissances (2) à l'aide des connaissances (20) obtenues,
le système étant **caractérisé en ce qu'**il est en outre configuré pour
- présenter (S4) l'hypothèse (30) à l'utilisateur humain (3),
- recevoir (S5) une confirmation (40) ou un refus (50) de la part de l'utilisateur humain (3) relativement à la présentation (S4) de l'hypothèse (30) à l'utilisateur humain (3), et
- mettre à jour la base de connaissances (2) selon l'hypothèse (30) en cas de réception de la confirmation (40) ou rejeter l'hypothèse (30) en cas de réception du refus (50), le système (1) étant configuré pour
- solliciter, auprès de l'utilisateur humain (3), un motif de la confirmation (40) ou du refus (50) en réponse à la réception, respectivement, de la confirmation (40) ou du refus (50), et
- recevoir le motif de la part de l'utilisateur humain (3), et
- mettre à jour la base de connaissances (2) selon le motif reçu.

2. Système robotique (1) selon la revendication 1, dans lequel
- les connaissances (20) obtenues sur la compétence physique comprennent
- des connaissances (20a) sur une précondition associée à la compétence physique,
- des connaissances (20b) sur une action associée à la compétence physique, et
- des connaissances (20c) sur un effet qui résulte de la précondition et de l'action.

3. Système robotique (1) selon la revendication 2, dans lequel
- les connaissances (20a) sur la précondition associée à la compétence physique comprennent des connaissances sur un état initial d'un ou de plusieurs objets (4, 4a, 4b) intervenant dans la démonstration (10) de la compétence physique et d'un ou de plusieurs attributs du ou des objets (4, 4a, 4b) avant la démonstration (10).

4. Système robotique (1) selon la revendication 2 ou 3, dans lequel
- les connaissances (20b) sur l'action associée à la compétence physique comprennent des connaissances sur une action réalisée pendant la démonstration (10) relativement à un ou plusieurs objets (4, 4a, 4b) intervenant dans la démonstration (10) de la compétence physique.

5. Système robotique (1) selon l'une quelconque des revendications 2 à 4, dans lequel
- les connaissances (20c) sur l'effet comprennent des connaissances sur un état final d'un ou de plusieurs objets (4, 4a, 4b) intervenant dans la démonstration (10) de la compétence physique et d'un ou de plusieurs attributs du ou des objets (4, 4a, 4b) après la démonstration (10).

6. Système robotique (1) selon l'une quelconque des revendications 2 à 5,
- le système (1) étant configuré pour obtenir les connaissances (20b) sur l'action associée à la compétence physique auprès de l'utilisateur humain (3).

7. Système robotique (1) selon l'une quelconque des revendications précédentes, dans lequel
- l'utilisation de la compétence physique dans le contexte différent par rapport au contexte de la démonstration (10) comprend l'utilisation de la compétence physique relativement à un ou plusieurs nouveaux objets qui sont similaires à un ou plusieurs objets (4, 4a, 4b) intervenant dans la démonstration (10) de la compétence physique, et qui sont connus de la base de connaissances (2).

8. Système robotique (1) selon la revendication 7, dans lequel le ou les objets (4, 4b) intervenant dans la démonstration (10) de la compétence physique sont soumis à une action associée à la compétence physique.

9. Système robotique (1) selon la revendication 7 ou 8,
- le système (1) étant configuré pour réaliser des examens de similarité sur la base de connaissances (2) par sélection du ou des nouveaux objets (4, 4b') de sorte que le ou les nouveaux objets (4, 4b') présentent au moins un élément parmi une similarité sémantique, une similarité physique et un ou plusieurs attributs similaires par rapport au ou aux objets (4, 4b) intervenant dans la démonstration (10) de la compétence physique.

10. Système robotique (1) selon la revendication 7, dans lequel le ou les objets (4, 4a) intervenant dans la démonstration (10) de la compétence physique sont utilisés par une action associée à la compétence physique.

11. Système robotique (1) selon la revendication 7 ou 10,
- le système (1) étant configuré pour réaliser des examens de similarité sur la base de connaissances (2) par sélection du ou des nouveaux objets de sorte que le ou les nouveaux objets présentent au moins un élément parmi une similarité sémantique, une similarité physique, un ou plusieurs attributs similaires et un effet similaire par rapport au ou aux objets (4, 4a) intervenant dans la démonstration (10) de la compétence physique.

12. Système robotique (1) selon l'une quelconque des revendications 7 à 11,
- le système (1) étant configuré pour présenter l'hypothèse (30) à l'aide d'une représentation holographique du ou des nouveaux objets (4, 4b').

13. Système robotique (1) selon la revendication 12,
- le système (1) étant configuré pour recevoir la confirmation (40) ou le refus (50) par détection d'une action de l'utilisateur humain (3) sur la présentation holographique.

14. Système robotique (1) selon la revendication 12 ou 13,
- le système (1) étant configuré pour recevoir la confirmation (40) ou le refus (50) par détection d'un classement en catégories du ou des nouveaux objets (4, 4b'), facultativement par détection d'un geste de balayage du ou des nouveaux objets (4, 4b') par l'utilisateur humain (3).

15. Système robotique (1) selon l'une quelconque des revendications 7 à 14, le système (1) étant configuré pour
- fournir en sortie un ou plusieurs attributs du ou des nouveaux objets,
- détecter une sélection, par l'utilisateur humain (3), parmi le ou les nouveaux objets, d'un objet présentant un attribut parmi le ou les attributs, et
- étendre la confirmation (40) ou le refus (50) de l'hypothèse (30), pour l'objet sélectionné présentant l'attribut, à d'autres objets connus de la base de connaissances (2) qui comprennent cet attribut.

16. Système robotique (1) selon l'une quelconque des revendications 7 à 15, le système étant configuré pour visualiser au moins un élément parmi une similarité sémantique, une similarité physique, un ou plusieurs attributs similaires et un effet similaire du ou des nouveaux objets relativement au ou aux objets (4, 4a, 4b) intervenant dans la démonstration (10) de la compétence physique.

17. Procédé d'apprentissage d'une ou de plusieurs nouvelles relations sémantiques dans une base de connaissances de compétences physiques, le procédé comprenant
- l'obtention (S1) de connaissances sur une compétence physique par observation d'une démonstration, par un utilisateur humain, de la compétence physique,
- la mise à jour (S2) de la base de connaissances avec les connaissances obtenues,
- la génération (S3) d'une hypothèse d'utilisation de la compétence physique dans un contexte différent par rapport à un contexte de la démonstration par réalisation d'examens de similarité sur la base de connaissances à l'aide des connaissances obtenues,
le procédé étant **caractérisé en ce qu'**il comprend en outre
- la présentation (S4) de l'hypothèse à l'utilisateur humain,
- la réception (S5) d'une confirmation ou d'un refus de la part de l'utilisateur humain relativement à la présentation de l'hypothèse à l'utilisateur humain, et
- la mise à jour (S6) de la base de connaissances selon l'hypothèse en cas de réception de la confirmation ou le rejet de l'hypothèse en cas de réception du refus, le procédé comprenant
- la sollicitation, auprès de l'utilisateur humain, d'un motif de la confirmation ou du refus en réponse à la réception, respectivement, de la confirmation ou du refus, et
- la réception du motif de la part de l'utilisateur humain, et
- la mise à jour de la base de connaissances selon le motif reçu.
